(19) Europäisches Patentamt
European Patent Office
Office européen des brevets

(11) **EP 3 404 482 A1**

(12) **DEMANDE DE BREVET EUROPEEN**

(43) Date de publication:
**21.11.2018 Bulletin 2018/47**

(51) Int Cl.:
**G03B 17/02** (2006.01)     **B60R 11/04** (2006.01)
**G02B 27/00** (2006.01)     G02B 3/04 (2006.01)

(21) Numéro de dépôt: **18171905.5**

(22) Date de dépôt: **11.05.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **17.05.2017 FR 1754341**

(71) Demandeur: **Valeo Systèmes d'Essuyage**
**78322 Le Mesnil Saint Denis (FR)**

(72) Inventeurs:
• **BRETAGNOL, Frédéric**
**63500 ISSOIRE (FR)**
• **GARNIER, Denis**
**93012 BOBIGNY (FR)**
• **PINCHON, Nicolas**
**93012 BOBIGNY (FR)**
• **GRASSO, Giuseppe**
**63500 ISSOIRE (FR)**
• **TREBOUET, Marcel**
**78322 Le Mesnil Saint Denis (FR)**

(74) Mandataire: **Valeo Systèmes d'Essuyage**
**ZA L'Agiot**
**8, Rue Louis Lormand**
**CS 90581 La Verrière**
**78322 Le Mesnil Saint Denis (FR)**

(54) **DISPOSITIF DE PROTECTION D'UN CAPTEUR OPTIQUE ET SYSTÈME D'ASSISTANCE À LA CONDUITE ASSOCIÉ**

(57) L'invention concerne un dispositif de protection (3) d'un capteur optique (13) pour véhicule automobile, ledit capteur optique (13) comprenant une optique (14).

Selon l'invention, le dispositif de protection (3) comporte un élément optique (9) configuré pour être disposé en amont de l'optique (14) du capteur optique (13) et présentant au moins une surface (9a, 9b) de forme générale asphérique.

L'invention concerne également un système d'assistance à la conduite correspondant.

Fig.4

Printed by Jouve, 75001 PARIS (FR)

**Description**

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant un objectif, notamment comprenant au moins une lentille. Plus particulièrement, l'invention concerne un dispositif de protection d'un tel capteur optique.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connait des caméras qui sont installées à l'intérieur de l'habitacle d'un véhicule contre la lunette / vitre arrière en visant vers l'arrière depuis la lunette arrière du véhicule. Ces caméras sont bien protégées des aléas climatiques extérieurs et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère donc installer les caméras des systèmes d'assistance à la conduite à l'extérieur des véhicules à différents endroits selon l'utilisation souhaitée, par exemple au niveau du pare-chocs arrière ou avant, ou au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des couts de fonctionnement d'un tel système d'assistance à la conduite car ils nécessitent l'utilisation de quantités de liquide de nettoyage assez importantes.

Selon une solution connue, des moyens de vibration d'une vitre de protection de la caméra sont prévus afin d'en décoller les saletés de la vitre de protection de la caméra. Toutefois, il a été constaté que l'efficacité d'un tel dispositif pour des salissures tenaces et incrustées peut être limitée malgré la vibration de la vitre de protection.

Selon une autre solution, la caméra est agencée dans un dispositif de protection. Cependant, un tel dispositif de protection est très encombrant à installer.

De plus, l'utilisation d'un tel dispositif de protection ne permet pas toujours d'avoir un grand angle de vision.

La présente invention se propose de remédier au moins partiellement aux inconvénients ci-dessus mentionnés en présentant une alternative d'un dispositif de protection d'un capteur optique permettant d'empêcher le dépôt de salissures sur le capteur optique tel qu'une caméra tout en conservant un grand angle de vision.

À cet effet l'invention a pour objet un dispositif de protection d'un capteur optique pour véhicule automobile, ledit capteur optique comprenant une optique, caractérisé en ce que le dispositif de protection comporte un élément optique configuré pour être disposé en amont de l'optique du capteur optique et présentant au moins une surface de forme générale asphérique.

La ou les formes asphériques permettent d'obtenir un dispositif de protection compact sans trop dévier les rayons, et donc sans trop altérer les performances optiques du capteur optique qui serait placé derrière un tel élément optique.

On comprend que la ou les formes asphériques sont définies pour chaque surface en regard de son profil général, indépendamment de l'état de surface et de la rugosité de cette surface. A titre d'exemple, si un ou plusieurs bourrelets sont réalisés en surface de l'élément optique pour l'obtention d'un effet optique, par exemple diffusant, ou pour éviter la stagnation de liquide en surface, ces bourrelets ne sont pas considérés comme participant à définir la forme générale de l'élément optique et donc ne sont pas considérés pour évaluer le caractère asphérique de celle-ci.

Ledit dispositif de protection du capteur optique peut en outre comporter une ou plusieurs caractéristiques suivantes, prises séparément ou en combinaison :

- l'élément optique est au moins partiellement transparent ;
- ladite au moins une surface est une surface hyperbolique ;
- la flèche de ladite au moins une surface de l'élément optique en fonction de la distance radiale à l'axe optique de l'élément optique est donnée par l'équation (a) :

$$z = \frac{cr^2}{1 + \sqrt{1 - (1+k)c^2 r^2}} + \alpha_1 r^2 + \alpha_2 r^4 + \alpha_3 r^6 + \alpha_4 r^8$$

dans laquelle :

- $c$ correspond à la courbure de la surface de l'élément optique,
- $r$ à la distance radiale à l'axe optique,
- $k$ à la constante conique, et
- $\alpha_{i[1,..,4]}$ aux coefficients asphériques.

- la constante conique est inférieure à -1, de préférence inférieure à -50 ;
- la constante conique est comprise entre -50 et -200 ;

- la courbure de ladite au moins une surface de l'élément optique est comprise entre $\frac{1}{15}$ mm$^{-1}$ et $\frac{1}{5}$ mm$^{-1}$ ;
- l'élément optique présente une surface interne et une surface externe opposées, telles que la surface interne et la surface externe sont de formes générales asphériques différentes ;
- la surface interne et la surface externe vérifient l'équation (a) ;
- la constante conique est différente entre les équations (a) de la flèche de la surface interne et de la surface externe de l'élément optique ;
- les coefficients asphériques sont différents entre les équations (a) de la flèche de la surface interne et de la surface externe de l'élément optique ;
- l'élément optique est configuré pour être agencé à une distance inférieure à 5mm de l'optique du capteur optique, de préférence inférieure à 3mm de l'optique du capteur optique ;
- l'élément optique est configuré pour être disposé en amont de l'optique du capteur optique de sorte que l'axe optique de l'élément optique soit confondu avec l'axe optique du capteur optique ;
- l'élément optique est monté mobile en rotation autour d'un axe de rotation ;
- l'élément optique est disposé de façon centrée par rapport à son axe de rotation ;
- l'élément optique est agencé en amont du dispositif de protection de façon à faire face à une scène de route dont le capteur optique est configuré pour participer à la prise de vues ;
- ledit dispositif comporte un boitier solidarisé avec l'élément optique et présentant un logement configuré pour recevoir le capteur optique ;
- la surface interne présente une propriété antibuée, en particulier la surface interne dudit élément optique présente un revêtement antibuée ;
- la surface interne et/ou la surface externe présente au moins une propriété choisie dans la liste suivante : filtre infrarouge, photocatalytique, hydrophobe, super hydrophobe, lipophobe, hydrophile, super hydrophile, résistance aux gravillons.

L'invention concerne également un système d'assistance à la conduite comportant un capteur optique comprenant une optique. Selon l'invention, ledit système comporte un dispositif de protection du capteur optique tel que défini précédemment.

Selon un aspect de l'invention, l'élément optique est distinct du capteur optique.

D'autres caractéristiques et avantages de l'invention apparaitront plus clairement à la lecture de la description suivante, donnée à titre d'exemple illustratif et non limitatif, et des dessins annexés parmi lesquels :

- la figure 1 représente de façon schématique un véhicule automobile comprenant un système d'assistance à la conduite selon l'invention,
- la figure 2 est une vue en perspective d'un dispositif de protection d'un capteur optique du système d'assistance de la figure 1,
- la figure 3 est une vue en coupe longitudinale partielle du dispositif de protection de la figure 2,
- la figure 4 est une vue représentant de manière partielle et schématique un capteur optique du système d'assistance à la conduite et un élément optique de protection du capteur optique,
- la figure 5 représente de façon schématique une surface de forme générale asphérique de l'élément optique,
- la figure 6 est une variante du dispositif de protection, et
- la figure 7 est une autre variante du dispositif de protection.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

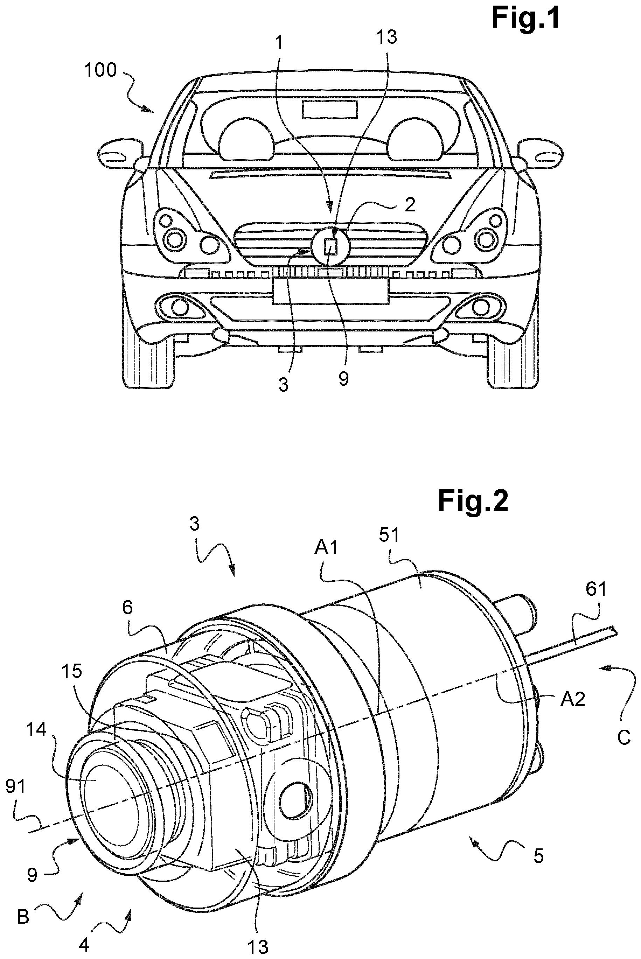

La figure 1 montre un véhicule automobile 100 équipé d'au moins un système d'assistance à la conduite 1 selon l'invention.

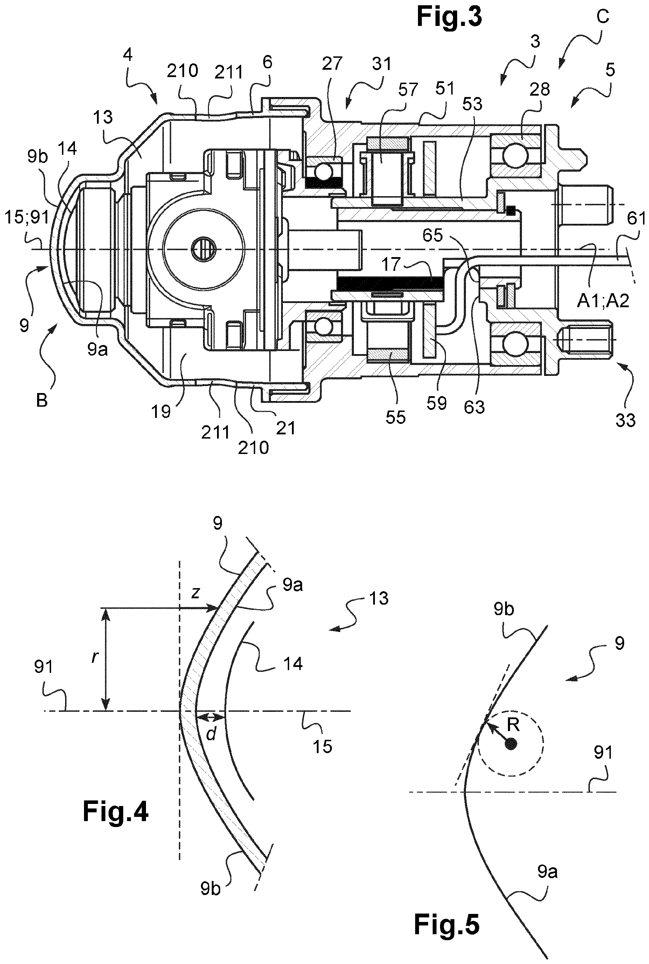

Le système d'assistance à la conduite 1 comporte notamment au moins un capteur optique 13 et un dispositif de protection 3 du capteur optique 13 représenté sur les figures 2 et 3.

Le capteur optique 13 (voir figures 1 à 3) est par exemple un capteur optique 13 de prise de vues tel qu'une caméra. Il peut s'agir d'un capteur CCD (pour "charged coupled device" en anglais à savoir un dispositif à transfert de charge) ou d'un capteur CMOS comportant une matrice de photodiodes miniatures. Selon une autre variante, il peut s'agir d'un capteur pour télédétection par laser dit capteur LIDAR, acronyme en anglais de "light détection and ranging".

Comme cela est mieux visible sur les figures 2 et 3, le capteur optique 13 comporte une optique 14 d'axe optique 15. L'optique 14 est par exemple un objectif. Un objectif peut comporter au moins une lentille, en particulier plusieurs lentilles suivant le champ de vision et la résolution, par exemple entre deux et dix lentilles, généralement quatre ou cinq lentilles, voire dix lentilles dans le cas d'une optique dite oeil de poisson ("fish-eye" en anglais). Au moins une des lentilles de l'optique 14 est par exemple convexe (bombée) de convexité orientée vers l'extérieur du capteur optique 13, telle qu'une optique dite oeil de poisson ("fish-eye" en anglais).

Le capteur optique 13 peut comporter de plus une partie formant support 17 (figure 3) du capteur optique 13. Il s'agit ici d'une partie arrière du capteur optique 13 du côté opposé à l'optique 14.

Selon le mode de réalisation illustré, le capteur optique 13 est destiné à être monté dans le dispositif de protection 3. Plus précisément, le capteur optique 13 et notamment son support 17 sont destinés à être montés fixes dans le dispositif de protection 3.

Selon l'exemple illustré sur la figure 1, le dispositif de protection 3 est monté à l'avant du véhicule 100 au niveau d'un pare-chocs. Bien entendu, en variante le dispositif de protection 3 peut être monté à l'arrière du véhicule 100, par exemple au niveau du pare-chocs ou de la plaque d'immatriculation. Il peut aussi par exemple être monté sur les côtés du véhicule, par exemple au niveau des rétroviseurs.

Le dispositif de protection 3 peut être fixé selon toute technique connue, sur tout élément 2 du véhicule 100, tel qu'un élément de carrosserie ou un élément extérieur tel qu'un pare-chocs, un rétroviseur ou une plaque d'immatriculation. À cet effet, on peut citer de façon non exhaustive un système de clips, un système de vissage, ou encore un système de collage.

**Dispositif de protection**

Plus précisément, en se référant de nouveau aux figures 2 et 3, le dispositif de protection 3 comporte :

- au moins un accessoire 4 pour véhicule automobile 100 (en se référant également à la figure 1), cet accessoire 4 étant monté mobile en rotation autour d'un axe de rotation A1 et ayant pour fonction la protection du capteur optique 13, et
- un actionneur, plus précisément un moteur 5, configuré pour entrainer en rotation l'accessoire 4.

Le dispositif de protection 3 est donc un dispositif motorisé.

Notamment, le dispositif de protection 3 peut comporter un premier sous-ensemble B et un deuxième sous-ensemble C distincts et assemblés l'un à l'autre. Le premier sous-ensemble B peut former l'accessoire 4 pour véhicule automobile 100. Le deuxième sous-ensemble C peut comporter le moteur 5, pour entrainer en rotation le premier sous-ensemble B.

Accessoire

L'accessoire 4 ou moyen de protection peut être au moins partiellement transparent.

Selon le mode de réalisation décrit, l'accessoire 4 comporte un élément optique 9. Selon ce mode de réalisation, l'accessoire 4, et plus généralement le dispositif de protection 3 comporte également avantageusement un boitier 6 solidarisé à l'élément optique 9.

L'élément optique 9 peut être réalisé d'une seule pièce avec le boitier 6. En alternative, le boitier 6 et l'élément optique 9 peuvent être réalisés par deux pièces distinctes solidarisées.

L'élément optique 9 et le boitier 6 sont décrits plus en détail ci-après.

L'élément optique 9, mieux visible sur les figures 2 à 4, est destiné à protéger l'optique 14 du capteur optique 13 des projections éventuelles de salissures ou débris solides qui pourraient abimer cette optique 14. Il s'agit donc d'un élément de protection, ou plus précisément d'un masque de protection du capteur optique 13, et c'est cet élément optique 9 qui est soumis aux agressions provenant de l'extérieur, c'est-à-dire aussi bien des projections d'eau, de polluants, de graviers que des dépôts de polluants ou des traces d'eau.

Selon le mode de réalisation décrit, l'élément optique 9 est distinct du capteur optique 13.

Cet élément optique 9 présente un axe optique 91.

L'élément optique 9 est agencé en amont du dispositif de protection 3. Dans cet exemple, l'élément optique 9 est agencé à l'avant du dispositif de protection 3. Autrement dit, l'élément optique 9 est agencé à l'avant de l'accessoire 4, ou encore à l'avant du boitier 6. L'avant du dispositif de protection 3 s'entend de la partie destinée à faire face à la scène de route dont le capteur optique 13 participe à la prise de vues, lorsque le dispositif de protection 3 est monté sur le véhicule 100 (figure 1). Par opposition, l'arrière du dispositif de protection 3 est la partie opposée à l'avant ; il s'agit donc la partie la plus éloignée de la scène de route dont le capteur optique 13 participe à la prise de vues.

Plus précisément, l'élément optique 9 est destiné à être disposé en amont du capteur optique 13, plus précisément en amont de l'optique 14. Dans la présente, le terme amont est défini par rapport à l'axe optique 15 et par rapport à la scène de route dont le capteur optique 13 participe à la prise de vues. Autrement dit, on comprend par « en amont » de l'optique 14, une position dans laquelle l'élément optique 9 est disposé entre l'optique 14 et la scène de route dont le capteur optique 13 participe à la prise de vues, selon l'axe optique 15.

Cet élément optique 9 est avantageusement dimensionné de façon à recouvrir toute la surface de l'optique 14.

Agencé dans le champ de vision du capteur optique 13, l'élément optique 9 est avantageusement transparent afin de ne pas nuire à l'efficacité du capteur optique 13. Cet élément optique 9 peut être réalisé en verre ou en un matériau plastique transparent tel que du polycarbonate.

L'élément optique 9 peut être agencé de façon centrée par rapport au capteur optique 13, plus précisément de façon centrée par rapport à l'optique 14. L'élément optique 9 est agencé de sorte que son axe optique 91 est confondu avec l'axe optique 15 du capteur optique 13 (voir figure 4).

En outre, l'élément optique 9 présente au moins une surface 9a, 9b de forme générale asphérique. Plus précisément, la partie de l'élément optique 9 destinée à être agencée directement en regard de l'optique 14 présente cette ou ces surfaces 9a, 9b de forme générale asphérique.

La surface 9a, respectivement 9b, asphérique de l'élément optique 9 n'épouse pas la forme d'une sphère. Autrement dit, la courbure d'une telle surface asphérique 9a, 9b n'est pas constante en tout point, contrairement à celle d'une sphère. L'élément optique 9 ne présente donc pas une simple forme sphérique mais est de forme plus complexe.

Il convient de noter que l'élément optique est ici de forme asphérique, c'est-à-dire avec une forme qui se rapproche d'une forme sphérique, et que cette forme asphérique doit être considérée pour une épaisseur donnée de l'élément optique définie entre un profil définissant la surface interne de l'élément optique et un profil définissant la surface externe de cet élément optique. Ce sont les profils généraux des surfaces externes et/ou internes qui doivent être pris en considération et la présence de bourrelet et/ou de picots sur la surface externe notamment de l'élément optique ne doit pas être ici pas prise en compte pour la définition de la forme asphérique de l'élément optique.

La flèche z de chaque surface asphérique 9a, 9b, en fonction de la distance radiale *r* à l'axe optique 91 de l'élément optique 9, est donnée par l'équation (a) suivante :

$$(a) : z = \frac{cr^2}{1+\sqrt{1-(1+k)c^2r^2}} + \alpha_1 r^2 + \alpha_2 r^4 + \alpha_3 r^6 + \alpha_4 r^8$$

Dans cette équation (a), le paramètre c correspond à la courbure de la surface de l'élément optique 9. Ce paramètre c est l'inverse du rayon de courbure R (voir figure 5). Le rayon de courbure R varie avec la distance à l'axe optique 91. En un point particulier, le rayon de courbure R peut être défini comme celui du cercle tangent à la surface au point considéré. Un tel cercle est appelé cercle osculateur. Un tel cercle est représenté de façon schématique par une ligne avec des tirets sur la figure 5. Selon un exemple de réalisation particulier, le rayon de courbure R est compris entre 5mm et 15mm. La courbure c est donc comprise entre $\frac{1}{15}$ mm⁻¹ et $\frac{1}{5}$ mm⁻¹.

De plus, dans l'équation (a), le paramètre *r* correspond à la distance radiale à l'axe optique 91, comme schématisé sur la figure 4.

Le paramètre $k$, non représenté sur les figures, correspond à la constante conique, aussi appelée constante de conicité. Il s'agit d'une valeur mathématique représentative de la variation de la courbure de la surface entre sa partie centrale et ses bords. Autrement dit, le paramètre $k$ caractérise la variation du rayon de courbure $R$ à mesure que l'on s'éloigne du sommet. Cette variation confère des propriétés optiques particulières aux surfaces qui possèdent cette propriété d'asphéricité.

Enfin, les paramètres $\alpha_{i[1,...,4]}$ correspondent aux coefficients asphériques. Dans l'équation (a) donnée ci-dessus, les termes polynomiaux $\alpha_1 r^2$ à $\alpha_4 r^8$ vont jusqu'à une puissance 8 de la distance radiale $r$, mais bien entendu il peut y avoir moins de ces termes polynomiaux ou au contraire plus.

Ces coefficients asphériques $\alpha_i$ sont très faibles, notamment inférieurs à 1. À titre d'exemple non limitatif, $\alpha_1$ est compris entre 0,01 et 0,1 ; $\alpha_2$ entre $-10^{-5}$ et $-10^{-6}$ ; $\alpha_3$ entre $10^{-9}$ et $10^{-10}$ et $\alpha_4$ entre $10^{-10}$ et $10^{-11}$.

Selon un exemple particulier, la surface asphérique forme une section conique.

Dans ce cas les coefficients asphériques $\alpha_i$ sont nuls. La flèche $z$ de l'élément optique 9 en fonction de la distance radiale $r$ à l'axe optique 91 de l'élément optique 9 est alors donnée par l'équation (b) suivante :

$$(b) : z = \frac{cr^2}{1+\sqrt{1-(1+k)c^2 r^2}}$$

Dans cette équation (b), les paramètres $c, k, r$ sont les mêmes que dans l'équation (a). En d'autres termes l'équation (b) correspond à l'équation (a) avec les coefficients $\alpha_i$ nuls.

Selon la valeur de la constante conique $k$, la surface 9a, 9b asphérique peut présenter différentes formes coniques, telles qu'elliptiques, paraboliques ou encore hyperboliques.

Selon un mode de réalisation préféré, au moins une surface 9a, 9b de l'élément optique 9 est de forme générale hyperbolique. La flèche $z$ de la surface 9a, 9b de forme générale d'hyperbole est donnée par l'équation (b). En outre, dans cette équation (b), la constante conique $k$ est inférieure à -1, notamment très inférieure à -1. De préférence, la constante conique $k$ est inférieure à -50, notamment la constante conique $k$ est comprise entre -50 et -200.

Par ailleurs, l'élément optique 9 présente une surface interne 9a et une surface externe 9a opposées. La surface interne 9a et la surface externe 9b présentent chacune une forme générale asphérique, et en particulier une forme générale d'hyperbole. Les formes asphériques, ou plus précisément hyperboliques, sont différentes entre la surface interne 9a et la surface externe 9b de l'élément optique 9. Comme précédemment, c'est le profil général de la surface interne et de la surface externe qui doit être pris en considération pour évaluer la forme asphérique, et en particulier la forme d'hyperbole, sans tenir compte de la rugosité de cette surface et de la présence de bourrelets ou picots modelant l'état de surface.

En particulier, la constante conique $k$ est différente pour la surface interne 9a et pour la surface externe 9b. Selon un exemple de réalisation particulier non limitatif, la constante conique $k$ de l'ordre de -159 pour l'une des surfaces et -76 pour l'autre surface.

En outre, les coefficients asphériques $\alpha_i$ sont différents dans l'équation (a) de la flèche $z$ de la surface interne 9a et dans celle de la flèche $z$ de la surface externe 9b.

Bien entendu, en alternative, les surfaces interne 9a et externe 9b peuvent être parallèles, c'est-à-dire que pour ces deux surfaces 9a et 9b, on peut avoir la même constante conique $k$ et les mêmes coefficients $\alpha_i$ dans l'équation (a) de la flèche $z$.

Par ailleurs, la surface 9a, respectivement 9b, asphérique de l'élément optique 9 peut être convexe ou concave. Dans cet exemple, l'élément optique 9 est de forme générale convexe. Selon l'exemple illustré, c'est la partie de l'élément optique 9 destinée à être agencée dans le champ de vision du capteur optique 13, qui présente cette forme sensiblement convexe. Ainsi, les surfaces 9a, 9b asphériques de l'élément optique 9 sont convexes avec leurs convexités orientées vers l'extérieur du dispositif de protection 3.

De plus, l'élément optique 9 peut être agencé à une distance $d$ de l'optique 14 (voir figure 4) qui est inférieure à 5mm, voire inférieure à 3mm de l'optique 14, par exemple de l'ordre de 2mm. L'élément optique 9 peut donc être agencé très proche de l'optique 14 tout en conservant un grand angle de vision, notamment supérieure à 110°, par exemple de l'ordre de 190°, et une bonne performance optique du fait des surfaces 9a, 9b asphériques. Ceci permet de rendre le dispositif de protection 3 très compact. En effet, les surfaces 9a, 9b asphériques offrent une meilleure performance optique par rapport à un élément optique qui serait réalisé avec des surfaces sphériques constantes. La forme générale hyperbolique des surfaces interne 9a et externe 9b de l'élément optique 9 est en particulier avantageuse pour une telle petite distance $d$ entre l'optique 14 et l'élément optique 9.

Enfin, l'élément optique 9 peut présenter une très faible épaisseur, par exemple de l'ordre du millimètre.

Par ailleurs, l'élément optique 9 est monté mobile en rotation autour d'un axe de rotation A1, schématisé sur les figures 2 et 3.

Avantageusement, l'axe de rotation A1 de l'élément optique 9 est confondu avec l'axe optique 15 du capteur optique 13. Cet axe de rotation A1 est également confondu avec l'axe optique 91 de l'élément optique 9.

L'élément optique 9 peut être disposé de façon centrée par rapport à l'axe de rotation A1. Cet élément optique 9 présente notamment une symétrie de révolution par rapport à l'axe de rotation A1.

Par ailleurs, lorsque le dispositif de protection 3 recevant le capteur optique 13 est monté sur le véhicule 100 (en se référant également à la figure 1), l'optique 14 et l'élément optique 9 font avantageusement saillie d'une ouverture prévue sur l'élément 2 du véhicule 100. Avec un tel agencement, le capteur optique 13 présente un grand angle de vision et l'optique 14 reste propre du fait de la présence de l'élément optique 9 entre l'optique 14 et l'extérieur du véhicule 100 (figure 1).

En outre, afin d'éviter un phénomène de condensation entre l'optique 14 et l'élément optique 9, la surface interne 9a de l'élément optique 9 (voir figures 3-5) a avantageusement une propriété antibuée. La surface interne 9a de l'élément optique 9 est la surface destinée à être agencée en regard de l'optique 14 du capteur optique 13. En particulier la surface interne 9a de l'élément optique 9 présente un revêtement antibuée.

En variante ou en complément, la surface interne 9a et/ou externe 9b de l'élément optique 9 peut présenter une ou plusieurs des propriétés suivantes : hydrophobe, filtre infra-rouge, photocatalytique, super hydrophobe, lipophobe, hydrophile, ou encore super hydrophile, résistance aux gravillons, ou encore tout autre traitement de surface permettant de réduire l'adhésion des salissures. En particulier, grâce aux propriétés hydrophobes de la surface externe de l'élément optique 9, des gouttes d'eau éventuelles ruisselèrent sur la surface externe sans laisser de traces car l'eau ne pourra pas adhérer sur cette surface externe. Ainsi, les couches ou revêtements sur la surface externe 9b l'élément optique 9, permettent de limiter les possibilités d'adhérence des polluants organiques ou minéraux ainsi que la présence de traces d'eau sur l'élément optique 9 pouvant nuire au bon fonctionnement du système d'assistance à la conduite 1. Avantageusement, une solution liquide, telle qu'une solution de type Rain-X®, peut être déposée sur la surface externe 9b de l'élément optique 9 afin de former une pellicule hydrophobe.

Ces exemples de réalisation sont fournis à titre illustratif et non limitatif. Par exemple, l'Homme du métier peut utiliser un élément optique 9 transparent présentant une surface externe 9b ayant d'autres propriétés permettant de limiter l'adhérence des salissures sur cette surface externe 9b sans sortir du cadre de la présente invention.

De manière optionnelle, l'élément optique 9 du dispositif de protection 3 peut également comprendre un système de dégivrage ou de désembuage intégré pour pouvoir garantir une bonne opérabilité du système d'assistance à la conduite 1 quelles que soient les conditions météorologiques, comme un filament ou une résistance de dégivrage par exemple.

En se référant de nouveau aux figures 2 et 3, en ce qui concerne le boitier 6, celui-ci est monté mobile en rotation autour de l'axe de rotation A1.

De préférence, le boitier 6 est un boitier étanche. Le boitier 6 peut être réalisé en tout matériau approprié connu de l'homme du métier.

Plus précisément, ce boitier 6 est agencé de façon à être entrainé en rotation par le moteur 5, ce qui permet la rotation de l'élément optique 9. L'élément optique 9 est donc dans cet exemple particulier, configuré pour être entrainé en rotation avec le boitier 6, de façon à permettre un nettoyage de l'élément optique 9 par effet centrifuge.

L'élément optique 9 est configuré pour être disposé à l'avant du boitier 6. L'avant du boitier 6 s'entend de la partie du boitier 6 destinée à faire face à la scène de route dont le capteur optique 13 participe à la prise de vues, lorsque le dispositif de protection 3 est monté sur le véhicule 100 (en se référant également à la figure 1). Par opposition, l'arrière du boitier 6 s'entend de la partie du boitier 6 opposée à l'avant du boitier 6 et est donc la partie la plus éloignée de la scène de route dont le capteur optique 13 participe à la prise de vues.

De plus, le capteur optique 13 est dans cet exemple monté au moins en partie dans le boitier 6. Pour ce faire, le boitier 6 comporte un logement 19 (voir figure 3) configuré pour recevoir le capteur optique 13, par exemple de sorte que l'axe optique 15 du capteur optique 13, soit confondu avec l'axe de rotation A1 du boitier 6.

Plus précisément, le boitier 6 comporte une paroi 21 définissant le logement 19 pour le capteur optique 13. Cette paroi 21 peut être centrée autour de l'axe de rotation A1 de l'élément optique 9 et du boitier 6. Dans cet exemple, la paroi 21 est de forme générale sensiblement cylindrique.

Selon une première variante, la paroi 21 peut être réalisée d'une seule pièce avec l'élément optique 9. Selon une deuxième variante, la paroi 21 et l'élément optique 9 peuvent être réalisées par deux pièces distinctes, et dans ce cas la paroi 21 est solidarisée à une extrémité à l'élément optique 9. Il s'agit en particulier de l'extrémité avant de la paroi 21 qui est solidarisée à l'élément optique 9. À titre d'exemple non limitatif, la solidarisation entre la paroi 21 et l'élément optique 9 peut se faire par soudure par ultrasons. Ainsi, le boitier 6 et l'élément optique 9 peuvent être réalisés en une ou plusieurs pièces. Le boitier 6 étant solidaire de l'élément optique 9, cela forme un bloc étanche empêchant ainsi l'introduction de salissures à l'intérieur du boitier 6 destiné à recevoir le capteur optique 13.

En variante ou en complément, on prévoit avantageusement au moins un moyen de limitation de la condensation, appelé par la suite moyen anti-condensation. Un tel moyen anti-condensation peut être prévu au niveau du boitier 6. En particulier, au moins un moyen anti-condensation peut être agencé sur la paroi 21 du boitier 6.

À titre d'exemple non limitatif, le moyen anti-condensation peut comprendre au moins un orifice 210 traversant au niveau du boitier 6, dans cet exemple sur la paroi 21 (voir figure 3). Le ou les orifices 210 peuvent être réalisés par perçage. De préférence, lorsque plusieurs orifices 210 sont prévus, ils sont agencés de façon symétrique par rapport à l'axe de rotation A1 du boitier 6.

Selon l'exemple illustré sur la figure 3, deux orifices 210 sont prévus, agencés de façon symétrique par rapport à l'axe de rotation A1 du boitier 6. Les orifices 210 communiquent entre l'intérieur du boitier 6 et l'extérieur du boitier 6 lorsque le dispositif de protection 3 est assemblé. À titre d'exemple non limitatif, chaque orifice 210 peut présenter un diamètre de l'ordre de 5mm.

De plus, on peut prévoir une ou plusieurs membranes 211 semi-perméables, respectivement agencées au moins au niveau d'un orifice 210. Selon l'exemple illustré sur la figure 3, deux membranes 211 sont représentées de façon schématique. Chaque membrane 211 peut être fixée sur un orifice 210 associé de manière étanche, par exemple par collage ou encore par soudure par ultrasons. Ces membranes 211 sont, selon les modes de réalisation décrits, perméables à l'air et imperméables à l'eau. La ou les membranes 211 favorisent ainsi la circulation de l'air à l'intérieur du boitier 6. Ceci permet une bonne ventilation entre l'optique 14 et l'élément optique 9 et empêche ainsi l'accumulation de condensation.

Avantageusement, on prévoit en outre au moins un moyen de compensation de la masse enlevée au niveau de l'orifice 210 ou des orifices 210. Selon l'exemple particulier illustré sur la figure 3, les deux membranes 211 sont placées de façon symétrique par rapport à l'axe de rotation A1 du boitier 6 et c'est cet agencement symétrique qui permet de limiter les effets de masse par rapport à la force centrifuge lors de la rotation du boitier 6.

Moteur

En ce qui concerne le moteur 5, dont différentes variantes sont représentées sur les figures 2, 3, 6 et 7, il peut s'agir notamment d'un moteur électrique de petite taille, voire miniature.

Par moteur électrique de petite taille on entend dans le cadre de la présente invention un moteur pas à pas, un actuateur, un moteur à courant continu avec ou sans balai, un moteur asynchrone ou un moteur synchrone, dont la masse est inférieure à 10kg, voire inférieure à 1kg, en particulier utilisés pour actionner des équipements pour les véhicules.

Par moteur électrique miniature on entend dans le cadre de la présente invention un moteur pas à pas, un actuateur, un moteur à courant continu avec ou sans balais, un moteur asynchrone ou un moteur synchrone, dont la masse est inférieure à 200g, voire inférieure à 100g, de préférence comprise entre 30 g et 100g, par exemple entre 30 g et 60g.

Le moteur 5 comporte un rotor 51 et un stator 53 fixe, le rotor 51 étant mobile en rotation par rapport au stator fixe 53.

Le moteur 5 est couplé au boitier 6 pour entrainer en rotation le boitier 6 et l'élément optique 9. Selon le mode de réalisation décrit, le boitier 6 et l'élément optique 9 sont solidaires du rotor 51 du moteur 5.

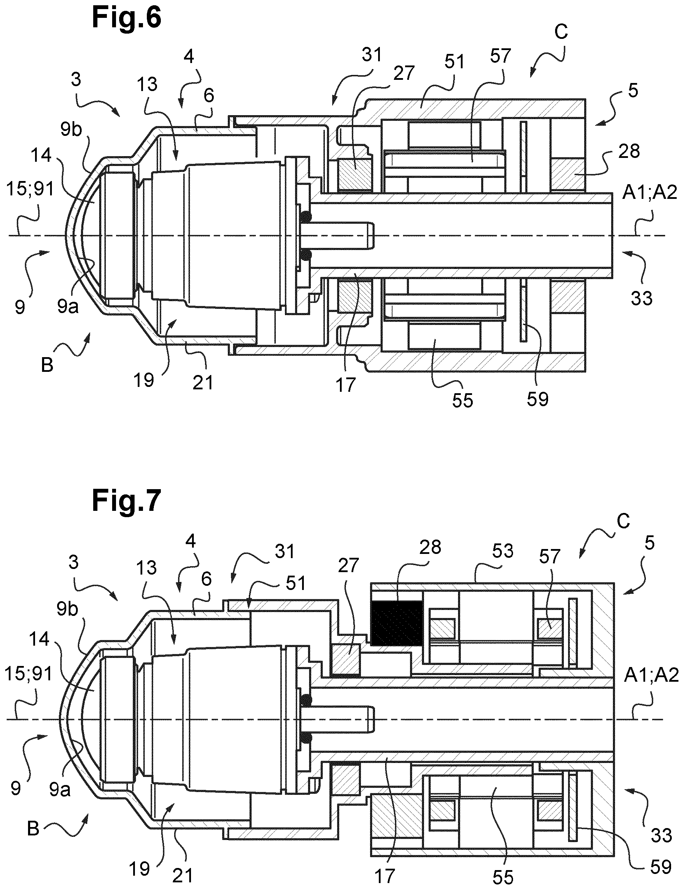

Selon le mode de réalisation illustré sur les figures 2, 3 et 6, le rotor 51 est disposé autour du stator 53. Le stator 53 est donc intérieur et le rotor 51 extérieur. Par ailleurs, dans l'exemple de la figure 6, le stator 53 peut former le support 17 du capteur optique 13. Autrement dit, le support 17 et le stator 53 sont réalisés d'une seule pièce.

Alternativement, comme illustré sur la figure 7, le stator 53 peut être agencé autour du rotor 51.

Par ailleurs, selon les différents modes de réalisation illustrés sur les figures 2, 3, 6 et 7, le moteur 5 est agencé à l'arrière du dispositif de protection 3, plus précisément le moteur 5 est assemblé à l'arrière du boitier 6. Autrement dit, le moteur 5 est agencé du côté opposé à l'élément optique 9.

On forme ainsi un bloc étanche empêchant ainsi l'introduction de salissures à l'intérieur du boitier 6 destiné à recevoir le capteur optique 13.

En outre, le moteur 5 est dans cet exemple agencé dans le prolongement du capteur optique 13.

Le moteur 5 est avantageusement un moteur 5 creux. Il peut recevoir au moins en partie le capteur optique 13.

Selon la configuration illustrée sur la figure 3 avec le stator 53 interne et le rotor 51 externe, le stator 53 peut recevoir au moins en partie le support 17 du capteur optique 13.

Selon la configuration illustrée sur la figure 6, avec le rotor 51 externe et le stator 53 formant le support optique 17, le rotor 51 creux peut recevoir au moins en partie le stator 53 formant support 17 du capteur optique 13.

Selon la configuration illustrée sur la figure 7, avec le rotor 51 interne, c'est ce dernier qui peut recevoir au moins en partie le support 17 du capteur optique 13.

Le moteur 5 est par exemple alimenté électriquement par une alimentation reliée au circuit électrique général du véhicule 100 (en se référant également à la figure 1).

À titre d'exemple non limitatif, le moteur 5 peut être plus particulièrement un moteur sans balais, aussi connu sous la dénomination « brushless motor » en anglais. Selon l'exemple illustré sur la figure 3, le moteur 5 comprend au moins un aimant 55 solidaire du rotor 51, et un nombre prédéfini de bobines électromagnétiques 57, en particulier au moins trois bobines électromagnétiques 57 montées sur le stator 53. Les bobines électromagnétiques 57 sont destinées à être alimentées pour permettre l'entrainement de l'aimant 55 solidaire du rotor 51. Le moteur 5 comprend à cet effet un circuit de commande 59 pour l'alimentation des bobines électromagnétiques 57. Ce circuit de commande 59 peut être relié à un faisceau d'alimentation électrique 61 relié au circuit électrique général du véhicule 100 (en se référant également à la figure 1).

Le moteur 5 peut avoir une vitesse de rotation comprise entre 1000 et 50000 tours/minute, de préférence entre 5000 et 20000 tours/minute, et de manière encore préférée entre 7000 et 15000 tours/minute. De telles vitesses de rotation permettent l'élimination d'éventuelles salissures qui se seraient déposées sur l'élément optique 9 par effet centrifuge et permettent ainsi de maintenir l'optique 14 du capteur optique 13 propre pour assurer un fonctionnement optimisé du système d'assistance à la conduite 1.

Le moteur 5 est configuré pour entrainer en rotation l'accessoire 4, à savoir dans cet exemple le boitier 6 et l'élément optique 9 solidaire du boitier 6.

Le moteur 5 est monté rotatif autour d'un axe de rotation A2. Le moteur 5 est par exemple agencé de sorte que son axe de rotation A2 est confondu avec l'axe de rotation A1 de l'élément optique 9, et avec l'axe optique 15 du capteur optique 13.

Par ailleurs, on prévoit avantageusement, un agencement étanche à l'arrière du moteur 5 pour le passage des câbles ou fils afin de limiter l'entrée de vapeur d'eau et/ou autres contaminants à l'intérieur du dispositif de protection 3.

Le dispositif de protection 3 comporte donc une partie mobile 31, aussi appelée partie tournante 31, et une partie fixe 33 (voir figure 3).

La partie mobile 31 comprend au moins le rotor 51 du moteur 5, et la partie fixe 33 comprend au moins le stator 53 du moteur 5.

La partie mobile 31 du dispositif motorisé 3 peut comporter également au moins un élément mobile solidaire du rotor 51, tel que notamment l'accessoire 4, c'est-à-dire le boitier 6 et l'élément optique 9 dans cet exemple.

De même, la partie fixe 33 peut comprendre également un élément ou support fixé au stator 53. Bien entendu, l'élément ou support peut être fixé directement ou non au stator 53. De façon non limitative, dans cet exemple, la partie fixe 33 du dispositif motorisé 3 comporte le support 17 fixe du capteur optique 13. Ce support fixe 17 est notamment fixé au stator 53.

Le support 17 du capteur optique 13 et le stator 53 comportent avantageusement des ouvertures respectives complémentaires 63, 65 pour permettre le raccordement du circuit de commande 59 au faisceau d'alimentation électrique 61.

En outre, le dispositif de protection 3 peut comprendre en particulier un ou plusieurs roulements 27, 28 représentés de façon schématique sur la figure 3. Selon cet exemple, le dispositif de protection 3 comprend deux roulements 27, 28.

Ces roulements 27, 28 sont chacun agencés entre la partie mobile 31 et la partie fixe 33 du dispositif de protection 3. Les roulements 27, 28 sont de forme générale sensiblement annulaire. De plus, les deux roulements 27, 28 sont agencés de manière concentrique avec le moteur 5.

En se référant à l'exemple particulier illustré sur la figure 3, un des roulements, par exemple le roulement 27 peut être disposé entre le rotor 51 et une partie, notamment une partie avant, du support 17 du capteur optique 13. L'autre roulement, le roulement 28 dans l'exemple de la figure 3, est disposé entre le rotor 51 et le stator 53 du moteur 5.

En alternative, les deux roulements 27 et 28 peuvent être agencés entre le rotor 51 et le stator 53. Notamment, selon la variante de réalisation illustrée sur la figure 5, les deux roulements 27, 28 sont agencés entre le rotor 51 et le stator 53 formant support 17 du capteur optique 13.

Par ailleurs, au moins l'un de ces roulements 27, 28 peut être un roulement magnétique. Un tel roulement magnétique permet d'éviter le bruit et les frottements généralement provoqués en fonctionnement du dispositif de protection 3 utilisant des roulements mécaniques.

Selon une variante, un roulement peut être magnétique et l'autre roulement peut être un roulement mécanique tel qu'un roulement à billes. Selon une autre variante, le dispositif motorisé 3 peut comprendre un unique roulement magnétique.

Ainsi, en agençant à seulement quelques millimètres de l'optique 14 du capteur optique 13, un élément optique 9 avec des surfaces 9a, 9b ayant une telle forme complexe, asphérique voire hyperbolique, on obtient un dispositif de protection 3 compact protégeant de salissures extérieures l'optique 14 du capteur optique 13 tout en garantissant un champ de vision relativement grand, par exemple de l'ordre de 190°.

De plus, la mise en rotation de cet élément optique 9, notamment par l'intermédiaire du boitier 6, assure que le champ de vision du capteur optique 13 soit toujours dégagé et propre. La rotation de l'élément optique 9 assure l'élimination des salissures du fait de la force centrifuge que ces dernières subissent.

**Revendications**

1. Dispositif de protection (3) d'un capteur optique (13) pour véhicule automobile (100), ledit capteur optique (13) comprenant une optique (14), **caractérisé en ce que** le dispositif de protection (3) comporte un élément optique (9) configuré pour être disposé en amont de l'optique (14) du capteur optique (13) et présentant au moins une surface (9a, 9b) de forme générale asphérique.

2. Dispositif (3) selon la revendication précédente, dans lequel ladite au moins une surface (9a, 9b) est une surface hyperbolique.

3. Dispositif (3) selon la revendication 1 ou 2, dans lequel la flèche (z) de ladite au moins une surface (9a, 9b) de l'élément optique (9) en fonction de la distance radiale (r) à l'axe optique (91) de l'élément optique (9) est donnée par l'équation (a) :

$$z = \frac{cr^2}{1 + \sqrt{1 - (1+k)c^2r^2}} + \alpha_1 r^2 + \alpha_2 r^4 + \alpha_3 r^6 + \alpha_4 r^8$$

dans laquelle :

- $c$ correspond à la courbure de la surface de l'élément optique (9),
- $r$ à la distance radiale à l'axe optique (91),
- $k$ à la constante conique, et
- $\alpha_{i[1,..,4]}$ aux coefficients asphériques.

4. Dispositif (3) selon la revendication précédente, dans lequel la constante conique (k) est inférieure à -1, de préférence inférieure à -50, notamment la constante conique (k) est comprise entre -50 et -200.

5. Dispositif (3) selon la revendication 3 ou 4, dans lequel la courbure (c) de ladite au moins une surface (9a, 9b) de l'élément optique (9) est comprise entre $\frac{1}{15}$ mm$^{-1}$ et $\frac{1}{5}$ mm$^{-1}$.

6. Dispositif (3) selon l'une quelconque des revendications précédentes, dans lequel l'élément optique (9) présente une surface interne (9a) et une surface externe (9b) opposées, telles que la surface interne (9a) et la surface externe (9b) sont de formes générales asphériques différentes.

7. Dispositif (3) selon les revendications 3 et 6, dans lequel la surface interne (9a) et la surface externe (9b) vérifie l'équation (a) et les coefficients asphériques ($\alpha_i$) sont différents entre les équations (a) de la flèche (z) de la surface interne (9a) et de la surface externe (9b) de l'élément optique (9).

8. Dispositif (3) selon l'une quelconque des revendications précédentes, dans lequel l'élément optique (9) est configuré pour être agencé à une distance (d) inférieure à 5mm de l'optique (14) du capteur optique (13), de préférence inférieure à 3mm de l'optique (14) du capteur optique (13).

9. Dispositif (3) selon l'une quelconque des revendications précédentes, dans lequel l'élément optique (9) est monté mobile en rotation autour d'un axe de rotation (A1).

10. Système d'assistance à la conduite (1) comportant un capteur optique (13) comprenant une optique (14), **caractérisé en ce que** ledit système (1) comporte en outre un dispositif de protection (3) du capteur optique (13) selon l'une quelconque des revendications précédentes.

**Fig.1**

100
1
13
2
3
9

**Fig.2**

3
A1
51
61
6
15
14
91
9
B
4
13
C
A2
5

## Fig.3

## Fig.4

## Fig.5

# Fig.6

# Fig.7

Europäisches
Patentamt

European
Patent Office

Office européen
des brevets

**RAPPORT DE RECHERCHE EUROPEENNE**

Numéro de la demande

EP 18 17 1905

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2011/181725 A1 (MATSUURA MITSUYASU [JP] ET AL) 28 juillet 2011 (2011-07-28) | 1,6 | INV. G03B17/02 |
| A | * alinéas [0064] - [0069]; figures 1b, 3a-3c * | 2-5,7-10 | B60R11/04 G02B27/00 |
| A | WO 97/22020 A1 (JORDANA PARETO EUGENI [ES]) 19 juin 1997 (1997-06-19) * le document en entier * | 2,6 | ADD. G02B3/04 |
| A | KR 2007 0034729 A (HYUNDAI MOTOR COMPANY) 29 mars 2007 (2007-03-29) * le document en entier * | 1-10 | |
| A | US 3 879 742 A (SMITH JESSOP) 22 avril 1975 (1975-04-22) * le document en entier * | 1-10 | |

DOMAINES TECHNIQUES
RECHERCHES (IPC)

G03B
B60R
G02B

Le présent rapport a été établi pour toutes les revendications

| Lieu de la recherche | Date d'achèvement de la recherche | Examinateur |
|---|---|---|
| Munich | 17 septembre 2018 | Marot-Lassauzaie, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 3 404 482 A1**

**ANNEXE AU RAPPORT DE RECHERCHE EUROPEENNE
RELATIF A LA DEMANDE DE BREVET EUROPEEN NO.**

EP 18 17 1905

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-09-2018

| Document brevet cité au rapport de recherche | Date de publication | Membre(s) de la famille de brevet(s) | Date de publication |
|---|---|---|---|
| US 2011181725 A1 | 28-07-2011 | CN 102135705 A<br>DE 102011003069 A1<br>JP 2011155468 A<br>US 2011181725 A1 | 27-07-2011<br>28-07-2011<br>11-08-2011<br>28-07-2011 |
| WO 9722020 A1 | 19-06-1997 | DE 69518990 D1<br>DE 69518990 T2<br>EP 0808470 A1<br>ES 2151971 T3<br>JP H11501411 A<br>US 5991098 A<br>WO 9722020 A1 | 02-11-2000<br>26-04-2001<br>26-11-1997<br>16-01-2001<br>02-02-1999<br>23-11-1999<br>19-06-1997 |
| KR 20070034729 A | 29-03-2007 | AUCUN | |
| US 3879742 A | 22-04-1975 | AUCUN | |

EPO FORM P0460

Pour tout renseignement concernant cette annexe : voir Journal Officiel de l'Office européen des brevets, No.12/82